# EUROPÄISCHE PATENTSCHRIFT

(11) **EP 0 628 592 B1**
(45) Veröffentlichungstag und Bekanntmachung des Hinweises auf die Patenterteilung: **04.07.2001**
(21) Anmeldenummer: 94108291.9
(22) Anmeldetag: 30.05.1994
(51) Int. Cl.: C08J 3/22, G03C 1/79, C08L 23/02

(54) **Polyolefin-Beschichtungsmasse für photographische Schichtträger**
Coating compound for the preparation of photographic layers
Masse de revêtement pour la fabrication de supports photographiques

(30) Priorität: 11.06.1993 DE 4319419
(43) Veröffentlichungstag der Anmeldung: 14.12.1994
(73) Patentinhaber: FELIX SCHOELLER JR. FOTO- UND SPEZIALPAPIERE GmbH & Co. KG., D-49086 Osnabrück (DE)
(72) Erfinder: Dethlefs, Ralf-Burkhard, Dr., D-49086 Osnabrück (DE); Hippold, Elke, D-32049 Herford (DE)
(74) Vertreter: Hoffmeister, Helmut, Dr. Dipl.-Phys.

(56) Entgegenhaltungen:
- DD-A- 153 605
- GB-A- 2 029 838
- US-A- 3 767 444
- US-A- 4 230 501
- US-A- 4 650 747
- DATABASE WPI Week 8845, Derwent Publications Ltd., London, GB; AN 88-319590 & JP-A-63 237 056 (MITSUBISHI PAPAER MILL)

## Beschreibung

Die Erfindung betrifft eine Polyolefin-Beschichtungsmasse für photographische Schichtträger, hergestellt durch Verschneiden eines polyolefinenthaltenden Masterbatches mit einem Polyolefin, wobei das Masterbatch in jeweils geeigneten Anteilen Polyolefin, Pigment(e) und Füllstoff(e) sowie Dispergierhilfsmittel enthält sowie den Schichtträger selbst.

Wasserfeste Schichtträger als Unterlage für die photographische Emulsionsschicht bestehen aus einem Kunststoffilm oder aus Basispapier mit vorzugsweise auf beiden Seiten unter Verwendung eines Extrusionsverfahrens aufgebrachter Beschichtungsmasse, die hauptsächlich aus Polyolefinen besteht und ein lichtreflektierendes Weißpigment und/oder andere Farbpigmente, optische Aufheller und/oder Zusätze wie Antistatika, Dispergierhilfsmittel, Antioxidantien, Trennmittel, Füllmittel u.ä. enthalten kann. Als lichtreflektierendes Weißpigment wird im allgemeinen Titandioxid in der kristallinen Form des Rutil oder Anatas verwendet.

Zu den für die Herstellung photographischer Schichtträger geeigneten, Titandioxid enthaltenden Polyolefinen gehören z.B. Polyethylen in seiner LDPE- oder HDPE-Modifikation, Ethylen/α-Olefin-Copolymere (LLDPE - *linear low density* PE), Polypropylen sowie Mischungen daraus.

Zur besseren Vermischbarkeit kann die Oberfläche des Titandioxid anorganisch und/oder organisch behandelt werden. Die anorganische Oberflächenbehandlung kann mit Al₂O₃, SiO₂, Mg(OH)₂ oder Zr-Aluminaten erfolgen. Organische Oberflächenbehandlungen werden mit Organopolysiloxanen, Silanen, mehrwertigen Alkoholen, Alkyltitanaten, Alkanolaminen u.ä. durchgeführt.

Anstelle oder zusätzlich zum Titandioxid finden auch andere Pigmente oder Füllstoffe Verwendung, wie z.B. Ultramarin, Kobaltblau, Kobaltviolett, Ruß, Al₂O₃, SiO₂ oder ein oberflächenbehandeltes CaCO₃. Titandioxid ist jedoch das hauptsächlich verwendete Pigment wegen seines hohen Brechungsindexes.

Es ist bekannt, daß die Schärfe eines Bildes durch den Gehalt an Titandioxid in der Beschichtung des photographischen Trägers beeinflußt wird. Ein höherer Pigmentgehalt, insbesondere Titandioxid-Gehalt, in der Polyolefinschicht ergibt einen höheren Schärfegrad des Bildes. Voraussetzung für die volle Entfaltung der Pigmenteigenschaften sowie eine störungsfreie Verarbeitung ist die homogene Verteilung der Pigmentteilchen und die vollständige Zerteilung der Pigmentagglomerate in der sie umgebenden Kunststoffmasse.

Polare Pigmente, wie z.B. Titandioxid, neigen speziell in unpolaren Polymeren, wie Polyolefinen, wegen großer Oberflächenenergie zu Reagglomeration, insbesondere bei Pigmentkonzentrationen größer als 15 Gew.-%. Es wurde bisher hingenommen, daß die Konzentration der eingesetzten Pigmente diese Grenze nicht überschreiten kann, obwohl die gewünschten bzw. erforderlichen Konzentrationen höher liegen. Dabei ist die vollständige Zerteilung der Agglomerate und Reagglomerate besonders wichtig bei der Herstellung dünner Beschichtungen (< 10 *µ*m Dicke) bei einem Schichtträger; hierbei sind Titandioxid-Konzentrationen bis 20 Gew.-% oder mehr wünschenswert. In dünnen Beschichtungen können Pigmentagglomerate einerseits die gesamte Lichtreflexion verringern, andererseits zu Loch- oder Schlitzbildung und schließlich zu Folienabrissen führen.

Zur Pigmentierung von Polyolefinen verwendet man vorzugsweise nicht die reinen Pigmente, sondern Pigment-Kunststoffkonzentrate (Masterbatches), d.h. Kunststoffe, in denen das Pigment bereits dispergiert wurde.

Die US-PS 3 767 444 beschreibt eine Pigmentmischung zum Einfärben von Polyolefinen. Als Träger dient ein Polyolefinwachs. Der Pigmentanteil beträgt bis 80%. Die Vormischung wird direkt zu der Kunststoffmasse zugegeben.

Die GB-A-2 029 838 beschreibt eine Farbmischung für Kunsfstoffartikel. Als Träger des Pigments dient Paraffin, Wachs oder Metallseifen. Der Pigmentanteil beträgt ebenfalls bis 80%.

Aus der DD-A-0 153 605 ist ein Farbkonzentrat (Masterbatch) zum Einfärben von hochmolekularen Werkstoffen bekannt. Als Träger dient ein Polyolefin oder Polyolefinwachs.

Allen bekannten Farbmischungen ist gemeinsam, daß sie mit Hilfe von Knetern, Walzwerken oder Mischern nachträglich in den polyolefinischen Kunststoff der Beschichtungsmasse für photographische Schichtträger eingebracht werden oder mit diesem direkt in die Verarbeitungsmaschine gegeben werden. Die Zerteilung, Benetzung und Verteilung der Pigmentteilchen erfolgt dabei aber nur unzureichend. Besonders die Benetzung der Pigmentteilchen erfolgt nicht optimal. Die hierdurch erhaltene Beschichtungsmasse ist inhomogen und mit Agglomeraten durchsetzt. Bei mit *bekannten* Beschichtungsmassen hergestellten photographischen Schichtträgern treten somit optisch sichtbare Störungen der Oberflächenstruktur auf und der Auftrag dünner photoempfindlicher Emulsionen ist gestört.

Die Zusatzstoffe, d.h. vor allem Pigmente, enthalten normalerweise Feuchtigkeit, Luft und/oder oberflächenaktive Substanzen, die zu einer Qualitätsminderung des Masterbatches führen. Die chemisch gebundene Restfeuchte an der Oberfläche der Pigmentpartikel und die Feuchtigkeit in ihren Poren führen in der Extrusionsbeschichtung zu sogenannten Wasserzöpfen. Außerdem behindern alle aus Kunststoffen oder Kunststoffmischungen stammenden flüchtigen Bestandteile das einwandfreie Benetzen von Pigmentpartikeln und führen zu porenhaltigem Granulat, was verminderte Qualität der Oberflächenstruktur bei der späteren Beschichtung zu Folge hat.

Darüberhinaus können die angewandten Dispergierhilfsmittel "ausschwitzen" und sich auf der Oberfläche niederschlagen, was später zu Schwierigkeiten bei der Weiterverarbeitung des beschichteten Trägermaterial führt; z.B. ergeben sich matte Stellen auf der Oberfläche oder verminderte Haftung zwischen dem Trägermaterial und einer lichtempfindlichen Emulsion.

Aufgabe der Erfindung ist es daher, die Voraussetzungen zur Herstellung eines einwandfreien photographischen Schichtträgers zu schaffen, der in seiner äußeren Beschichtung Pigment(e), insbesondere Titandioxid, enthält, und mit dem es gelingt, eine einwandfreie und gleichmäßige Verteilung des Pigments herzustellen. Die Beschichtungsmasse soll störungsfrei verarbeitbar sein.

Diese Aufgabe wird dadurch gelöst, daß das zur Herstellung der Beschichtungsmasse verwendete Masterbatch Polyolefinwachs(e) enthält, der (die) eine Schmelztemperatur aufweist (aufweisen), die etwa gleich der Schmelztemperatur des im Masterbatch verarbeiteten Polyolefins ist, jedenfalls nicht mehr als ± 15°C von ihr abweicht, wobei der Gehalt an Polyolefinwachse(n) in der Masse des Masterbatches so bemessen ist, daß nach Verdünnung mit einem Polyolefin die daraus hergestellte PolyolefinBeschichtungsmasse einen Anteil an Polyolefinwachs zwischen 0,3 und 5 Gew.-% enthält und der Pigmentgehalt über 15 Gew.-% liegt.

Überraschend hat sich herausgestellt, daß die Zugabe von Polyolefinwachs dann eine höhere Beimischung von Pigmenten, insbesondere Titandioxid, erlaubt, wenn zuerst ein *polyolefinenthaltendes* Masterbatch aus Pigment(en) und/oder Füllstoff(en), Dispergierhilfsmittel und Polyolefinwachs hergestellt wird und dieses anschließend mit dem zusätzlichen Polyolefin zu einer Beschichtungsmasse verdünnt wird.

Unter Polyolefinwachsen werden niedermolekulare Polyolefine oder Polyolefinglykole wachsartiger Konsistenz verstanden, insbesondere niedermolekulares Polyethylen oder als Polywachse bekannte Polyethylenglykole. Polyethylenwachse entstehen z.B. teils durch Hochdruckpolymerisation von Ethylen, teils durch Krackung aus dem hochmolekularen Niederdruck-Polyethylen. Entsprechendes gilt für andere Polyolefinwachse.

Zur Herstellung des Masterbatches und die hierdurch hergestellte erfindungsgemäße Beschichtungsmasse ist besonders gut ein Polyolefinwachs geeignet, dessen Schmelztemperatur der Schmelztemperatur des später zu verarbeitenden Polyolefins etwa entspricht; vorzugsweise hat das Polyolefinwachs eine maximale Schmelztemperatur-Abweichung von ± 15°C.

Gut geeignet für das der Beschichtungsmasse zugrunde liegende Masterbatch ist ein Polyethylenwachs mit einer Schmelztemperatur von 120°C bis 132°C, vorzugsweise 127°C ± 1°C.

Das Pigment kann Titandioxid in seiner Rutil- oder Anatasform sein. Aber auch andere Weißpigmente, wie z.B. Bariumsulfat BaSO₄, Calciumcarbonat CaCO₃, oder Buntpigmente, wie Ultramarin, Kobaltblau, Kobaltviolett, sowie Mischungen daraus können eingesetzt werden.

Die erfindungsgemäße Beschichtungsmasse enthält einen Pigmentgehalt *von mehr als* 15 Gew.-%. *Wenn davon ausgegangen wird, daß der Masterbatch einen bekannten Pigmentgehalt von bis zu 80 Gew.-% aufweist, so läßt sich durch Hinzurechnen des zur Verdünnung dienenden Polyolefins der Pigment- und/oder Füllstoffgesamtgehalt des Endproduktes berechnen .*

Ein Masterbatch kann beispielsweise wie folgt hergestellt werden: Es wurde eine Vormischung aus Titandioxid (ANATAS LOCR-K, Fa. SACHTLEBEN), Polyethylenglykol und Calcium-Stearat hergestellt. Als Polyethylenglykol wurde ein PEG 600 mit einem Molekulargewicht zwischen 200 und 4000 verwendet. Die Mischung wurde gemischt und anschließend kontinuierlich zusammen mit einem LLDPE-Granulat (DOWLEX 2035) verarbeitet. Nach der Verarbeitung war die Konzentration der einzelnen Komponenten:

| | |
|---|---|
| TiO₂ | 50 Gew.-% |
| Ca-Stearat | 1 Gew.-% |
| PE-Wachs | 1 Gew.-% |
| LLDPE | 48 Gew.-%. |

Dieses Masterbatch kann anschließend zu einer Beschichtungsmasse weiterverarbeitet werden.

Als Dispergierhilfsmittel in dem verwendeten Masterbatch können Salze oder Ester höherer Fettsäuren, wie z.B. Zink- oder Calcium-Stearat, verwendet werden.

Das zur Herstellung des erfindungsgemäßen Beschichtungsmasse Masterbatch oder das zum Verdünnen desselben eingesetzte Polyolefin kann Polyethylen niederer Dichte (LDPE) oder hoher Dichte (HDPE), Ethylen/α-Olefin-Copolymer sein.

Die Erfindung verkörpert sich demnach in den Anspruchsgegenständen der Ansprüche 1 und 9 und den jeweils zugeordneten Unteransprüchen. Letztere stellen nützliche Fortentwicklungen dar.

Die Erfindung wird anhand folgender Beispiele näher erläutert.

### Beispiel 1

Zunächst wurde in einem Trockenmischer eine Vormischung aus Titandioxid (Rutil 2073, Fa. KRONOS TITAN GMBH), Zinkstearat und Polyethylenwachs in Granulatform (PE 520, Fa. HOECHST) gemischt, und zwar in folgenden Anteilen (Gew.-%):

| | TiO₂ | Zn-Stearat | PE-Wachs |
|---|---|---|---|
| Versuch 1a | 94 | 3 | 3 |
| Versuch 1b | 96 | 2 | 2 |
| Versuch 1c | 94,6 | 1,3 | 4,1 |

Die Vormischung wurde kontinuierlich zusammen mit einem LD-Polyethylengranulat (ESCORENE LD 252), Fa. EXXON CHEM.) durch den Einfüllschacht des Doppelschneckenextruders (Typ ZSK 30) mit zwei gleichläufig ineinandergreifenden Schnecken aufgegeben, bis folgende Konzentrationen (Gew.-%) erreicht wurden:

| | TiO₂ | Zn-Stearat | PE-Wachs |
|---|---|---|---|
| Versuch 1a | 30 | 1 | 1 |
| Versuch 1b | 50 | 1 | 1 |
| Versuch 1c | 70 | 1 | 3 |

Folgende Arbeitsparameter wurden eingehalten:

| | |
|---|---|
| Temperatur | 260°C |
| (Mischzone des Extruders) | |
| Verweilzeit | 5 min |
| Schmelzentgasung | 5 - 200 mbar |
| Drehzahl der Extruderschnecke | 250 U/min |

### Beispiel 2

Es wurde eine Vormischung aus Titandioxid (ANATAS LOCR-K, Fa. SACHTLEBEN), Calcium-Stearat und Polyethylenwachs (PE 130, Dichte 0,970 g/cm³, Molekulargewicht etwa 3000; Hersteller: Fa. HOECHST) hergestellt durch trockene Vermischung. Diese Vormischung wurde anschließend kontinuierlich zusammen mit einem LLDPE-Granulat (DOWLEX 2025) wie im Beispiel 1 zu einem Masterbatch verarbeitet.

Die Konzentrationen im Masterbatch betrugen:

| | |
|---|---|
| TiO₂ | 50 Gew.-% |
| Ca-Stearat | 1 Gew.-% |
| PE-Wachs | |
| (PE 130) | 1 Gew.-%. |

### Vergleichsbeispiel V

Ein LDPE-Granulat mit der Dichte 0,915 g/cm³ und MFI (190°C) = 8,0g/10 min wurde zusammen mit Titandioxid (ANATAS) und Zn-Stearat mit einem Doppelschneckenextruder verarbeitet. Die TiO₂-Konzentration betrug 50 Gew.-%; Zn-Stearat wurde in einer Menge von 1 Gew.-% zugegeben.

### Prüfung der nach Beispiel 1 und 2 sowie dem Vergleichsbeispiel V hergestellten Polyolefinkonzentrate.

Zur Charakterisierung der Pigment-Polyolefinkonzentrate wurden folgende Prüfmethoden herangezogen:

### 1. Filtra-Test am Konzentrat

1000 g des Konzentrats werden im Technikumextruder bei einer Temperatur von 300°C durch ein Sieb von 36 µm Maschenweite extrudiert und der Druck am Schneckenanfang p1 und zwischen dem Sieb und der Schneckenspitze p2 gemessen. Je höher der p-Wert, um so mehr Rückstand befindet sich auf dem Sieb.

### 2. Zahl der Agglomerate in der Beschichtung

Das Polyolefinkonzentrat wird mit reinem Polyolefin so weit verdünnt, daß eine Mischung mit 20 Gew.-% TiO₂ entsteht. Damit wird ein Basispapier bei 300°C, 20 m/min Maschinengeschwindigkeit und 25 cm Bahnbreite extrusionsbeschichtet.

Im Durchlicht werden an 1 m² des beschichteten Papiers die Pigmentagglomerate ausgezählt, die ohne Lupe als dunkle Punkte auf einem Leuchttisch erkennbar sind. Diese Zahl wird als Aggl./m² angegeben.

### 3. Farbtonmessungen nach DIN 6174

Gemäß diesem Verfahren wird der Farbton durch die drei Zahlenwerte L, a und b wiedergegeben.
Das Symbol L gibt die Helligkeit an (je größer der Zahlenwert L ist, desto höher ist die Helligkeit).

Das Symbol a gibt eine rötliche Farbe an (je größer der Wert ist, desto stärker ist die rötlich Farbe). Falls der Wert a negativ ist, bedeutet dies, daß die rötliche Farbe unzureichend und statt dessen eine grünliche Farbe überwiegend ist.

Das Symbol b gibt eine gelbliche Farbe an (je größer deren Zahlenwert ist, desto stärker ist die gelbliche Farbe). Bei negativen Werten wird die Farbe bläulich. Bei a und b gleich Null ist der gemessene Gegenstand farblos.

Das Polyolefinkonzentrat wird mit reinem Polyolefin verdünnt, so daß eine Mischung mit 15 Gew.-% TiO₂ entsteht. Mit dieser Mischung wird ein fotografisches Basispapier extrusionsbeschichtet (Auftragsgewicht 30 g/m²) und daran die colorimetrischen Werte ermittelt.

Die Kunststoffkonzentrate weisen, bedingt durch die verringerte Zahl der Pigmentagglomerate und eine bessere Verteilung der Pigmentpartikel, einen höheren Weißgrad auf. Gleichzeitig tritt bei der weiteren Verarbeitung dieser Konzentrate zu einer erfindungsgemäßen Beschichtungsmasse kein Ausschwitzen mehr von Dispergierhilfsmitteln auf.

## Patentansprüche

1. Polyolefin-Beschichtungsmasse für photographische Schichtträger, hergestellt durch Verschneiden eines polyolefinenthaltenden Masterbatches mit einem Polyolefin, wobei das Masterbatch in jeweils geeigneten Anteilen Polyolefin, Pigment(e) und Füllstoff(e) sowie Dispergierhilfsmittel enthält,
dadurch gekennzeichnet, daß
das Masterbatch Polyolefinwachs(e) enthält, der (die) eine Schmelztemperatur aufweist (aufweisen), die etwa gleich der Schmelztemperatur des im Masterbatch verarbeiteten Polyolefins ist, jedenfalls nicht mehr als ± 15°C von ihr abweicht, wobei der Gehalt an Polyolefinwachse(n) in der Masse des Masterbatches so bemessen ist, daß nach Verdünnung mit reinem Polyolefin die daraus hergestellte Polyolefin-Beschichtungsmasse einen Anteil an Polyolefinwachses zwischen 0,3 und 5 Gew.-% enthält und der Pigmentgehalt über 15 Gew.-% liegt.

2. Beschichtungsmasse nach Anspruch 1, dadurch gekennzeichnet, daß im verwendeten Masterbatch das Polyolefin ein Polyethylen niederer Dichte (LDPE) oder hoher Dichte (HDPE) oder ein Ethylen/α-Olefin-Copolymer ist.

3. Beschichtungsmasse nach Anspruch 1 oder 2, dadurch gekennzeichnet, daß im verwendeten Masterbatch das Polyolefinwachs eine Schmelztemperatur von 120 bis 132°C, vorzugsweise von 127 ± 1°C hat.

4. Beschichtungsmasse nach Anspruch 1 oder 2 oder 3, dadurch gekennzeichnet, daß im verwendeten Masterbatch das Polyolefinwachs ein Polyethylenwachs ist.

5. Beschichtungsmasse nach Anspruch 1 bis 4, dadurch gekennzeichnet, daß im verwendeten Masterbatch als Pigment(e) und Füllstoff(e) einzelne oder eine Mischung aus der Gruppe folgender Stoffe enthalten sind: Titandioxid, Ultramarin, Kobaltblau, Kobaltviolett, Ruß, Aluminiumoxid, Siliciumoxid, Calciumcarbonat, Bariumsulfat.

6. Beschichtungsmasse nach Anspruch 1 oder 5, dadurch gekennzeichnet, daß im verwendeten Masterbatch als Dispergierhilfsmittel ein Salz oder ein Ester einer höheren Fettsäure verwendet ist, vorzugsweise ein Zink-, Calcium- oder Magnesium-Stearat.

7. Beschichtungsmasse nach einem der vorhergehenden Ansprüche 1 bis 6, dadurch gekennzeichnet, daß das zum Verdünnen verwendete Polyolefin ein Polyethylen niederer Dichte (LDPE) oder hoher Dichte (HDPE) oder ein Ethylen/α-Olefin-Copolymer ist.

8. Photographischer Schichtträger, bestehend aus einem Träger, der auf wenigstens einer seiner Flachseiten eine Trägerschicht besitzt, die aus der Beschichtungsmasse gemäß einem der Ansprüche 1 bis 7 besteht mit einem Anteil des Polyolefinwachses zwischen 0,3 und 5 Gew.-%, vorzugsweise zwischen 0,5 bis 3 Gew.-%.

## Claims

1. A polyolefin coating material for photographic film bases, produced by blending a polyolefin-containing master batch with a polyolefin, the master batch containing polyolefin, one or more pigments, one or more fillers and dispersing agents in suitable proportions,
characterised in that
the master batch contains one or more polyolefin waxes having a melting point approximately equal to or in no case more than ± 15°C from the melting-point of the polyolefin processed in the master batch, the content of polyolefin wax or waxes in the master batch being made such that after dilution with pure polyolefin the resulting polyolefin coating material contains between 0.3 and 5 wt.% polyolefin wax and the pigment content is over 15 wt.%.

2. A coating material according to claim 1, characterised in that the polyolefin in the master batch is a low-density polyethylene (LDPE) or a high-density polyethylene (HDPE) or an ethylene/α-olefin copolymer.

3. A coating material according to claim 1 or 2, characterised in that the polyolefin wax in the master batch melts at 120 to 132°C, preferably at 127 ± 1°C.

4. A coating material according to claim 1 or 2 or 3, characterised in that the polyolefin wax in the master batch is a polyethylene wax.

5. A coating material according to claim 1 or 4, characterised in that the pigment or pigments and the filler or fillers in the master batch are one substance or a mixture from the following group: titanium dioxide, ultramarine, cobalt blue, cobalt violet, carbon black, aluminium oxide, silicon oxide, calcium carbonate and barium sulphate.

6. A coating material according to claim 1 or 5, characterised in that the dispersing aid in the master batch is a salt or an ester of a higher fatty acid, preferably a zinc or calcium or magnesium stearate.

7. A coating material according to any of the preceding claims 1 to 6, characterised in that the polyolefin used for dilution is a low-density polyethylene (LDPE) or high-density polyethylene (HDPE) or an ethylene-α-olefin copolymer.

8. A photographic film base comprising a substrate provided on at least one flat side with a film base made of a coating material according to any of claims 1 to 7 and containing between 0.3 and 5 wt.% of polyolefin wax, preferably between 0.5 and 3 wt.%.

## Revendications

1. Masse de revêtement en polyoléfines pour la fabrication de supports photographiques, fabriquée par homogénéisation d'un mélange-mère contenant des polyoléfines avec une polyoléfine pure, le mélange-mère contenant selon des proportions respectivement appropriées une polyoléfine, un ou des pigments, et une ou des matières de charge, ainsi que des agents dispersants, caractérisée en ce que le mélange-mère contient une ou des cires de polyoléfine dont la température de fusion est approximativement égale à la température de fusion de la polyoléfine traitée dans le mélange-mère et ne s'en écarte en tous cas jamais de ± 15°C, la teneur en cire(s) de polyoléfine dans la masse du mélange-mère étant dosée d'une manière telle que, après dilution avec une polyoléfine pure, la masse de revêtement de polyoléfine qui en résulte contient une fraction de cire de polyoléfine comprise entre 0,3 et 5% en poids et la teneur en pigments est supérieure à 15% en poids.

2. Masse de revêtement selon la revendication 1, caractérisée en ce que la polyoléfine du mélange-mère utilisé est un polyéthylène à faible densité (LDPE) ou à haute densité (HDPE) ou un copolymère d'éthylène et d'oléfine-α.

3. Masse de revêtement selon la revendication 1 ou 2, caractérisée en ce que la température de fusion de la cire de polyoléfine du mélange-mère utilisé est comprise entre 120 et 132°C, de préférence de 127 ± 1°C.

4. Masse de revêtement selon l'une quelconque des revendications 1 à 3, caractérisée en ce que la cire de polyoléfine du mélange-mère utilisé est une cire de polyéthylène.

5. Masse de revêtement selon l'une quelconque des revendications 1 à 4, caractérisée en ce que le mélange-mère utilisé contient, comme pigment(s) et comme matière(s) de charge, des matières individuelles suivantes ou un mélange du groupe de matières suivantes: dioxyde de titane, outremer, bleu de cobalt, violet de cobalt, suie, oxyde d'aluminium, oxyde de silicium, carbonate de calcium, sulfate de baryum.

6. Masse de revêtement selon l'une quelconque des revendications 1 à 5, caractérisée en ce qu'un sel ou un ester d'un acide gras supérieur, de préférence un stéarate de zinc, de calcium ou de magnésium, est utilisé comme agent dispersant dans le mélange-mère utilisé.

7. Masse de revêtement selon l'une quelconque des revendications 1 à 6, caractérisée en ce qu'une polyoléfine utilisée pour la dilution est un polyéthylène de faible densité (LDPE) ou de haute densité (HDPE) ou un copolymère d'éthylène et d'oléfine-α.

8. Supports photographiques composés d'un support qui possède au moins sur l'un de ses côtés plats une couche de support qui se compose de la masse de revêtement conforme à l'une quelconque des revendications 1 à 7, où la proportion de la cire de polyoléfine est comprise entre 0,3 et 5% en poids, de préférence entre 0,5 et 3% en poids.
